# EUROPEAN PATENT APPLICATION

(11) **EP 2 854 358 A1**
(43) Date of publication of application: **01.04.2015**
(21) Application number: 13460067.5
(22) Date of filing: 30.09.2013
(51) Int. Cl.: H04L 29/06, H04W 4/00, H04L 12/24

(54) **A method for automatically establishing a wireless connection between a mobile device and at least one stationary device**

(71) Applicant: ABB Technology AG, 8050 Zürich (CH)
(72) Inventor: Lewandowski, Daniel, 30-384 Krakow (PL); Plesnar, Jacek, 30-419 Krakow (PL); Wojcik, Mariusz, 32-500 Chrzanow (PL)
(74) Representative: Chochorowska-Winiarska, Krystyna

(57) **Abstract**

The invention deals with a method for automatically establishing a wireless connection between a mobile device (10) and at least one stationary device (20), particularly an industrial automation device. The mobile device is equipped with a short-range communication module NFC MD (11) and a long-range communication module Wi-Fi MD (13), and the stationary device is equipped with a short-range communication module NFC SD (21) and a long-range communication module Wi-Fi SD (23), and by means of these devices the following steps are performed. In a control module (22) located in the stationary device (20), the access right of the mobile device (10) to the stationary device (20) is verified and the parameters of a temporary Wi-Fi network and of the IP address of the stationary device (20) are generated, whereupon the temporary Wi-Fi network is generated in the Wi-Fi SD module (23). Next, from a module for the operation of stationary devices located in the mobile device (10) a connection is established with the temporary Wi-Fi network generated by the module Wi-Fi SD (23), thereby executing an automatic connection between the mobile device (10) and the stationary device (20).

## Description

The invention deals with a method for automatically establishing a wireless connection between a mobile device and at least one stationary device, in particular an industrial automation device, applicable in the control and diagnosis of industrial automation devices.

### BACKGROUND OF THE INVENTION

In industrial plants, there is a number of automation devices which are equipped with systems allowing their configuration, modification of operating parameters, control of settings as well as the diagnosis of the device condition. Depending on the device manufacturer and also on its type, kind, or version, access to control parameters or diagnostic data can be very diverse. There are known solutions which make use of embedded panels with or without a display, requiring manual operation. In some solutions, such panels can be detached from the stationary device, which permits manual entering of data by the operator who does not need to be near the stationary device. After the data have been entered into the panel, it is reconnected to the stationary device and the data from the panel are automatically downloaded into the stationary device. There are known solutions in which data interchange with a stationary device is realized by means of a universal mobile device, such as a portable computer. Such connection is accomplished by means of a cable or wirelessly. In either case, to ensure the proper safety level, the operator has to manually start the authorization procedure when connecting to a given device, e.g. by giving the right password. The wireless connection is more convenient for the operator, as he does not need to have a cable to connect the mobile device with the stationary device, and moreover, the operator enjoys greater freedom both in terms of mobility and the distance to the stationary device. On the other hand, a wireless connection is more exposed to sniffing, which may result in establishing a connection with the stationary device by unauthorized persons.

A popular type of efficient wireless network is the Wi-Fi standard that has a number of security features protecting against unauthorized access in the form of access passwords and transmission encryption. It is also possible to hide an active network so that it cannot be properly identified without knowing its name. Nevertheless, every sufficiently long active Wi-Fi network is exposed to sniffing for extended periods, which increases chances that the access protections will be broken by a person acting in ill will.

Existing industrial automation devices use different access methods depending on the device manufacturer, the device function and type. If there are more such devices in one place, then, to diagnose them all the operator has to get access to each one independently and to launch suitable dedicated software for each one, for instance using a portable computer. Consequently, in the case of a larger number of different devices, the process of obtaining full diagnostic information is a long and inconvenient process for the operator.

There are known solutions offering automatic logging in to a device. The patent application EP 1894314 describes a system and a method which provide for logging in to a protected network, e.g. a Wi-Fi network, using the short-range communication, e. g. near field communication (NFC). A device which is to be automatically logged in to the network is neared to a small distance to a dedicated device which has already been connected into the network. Proximity of the verified device to the connected device allows the activation of the NFC protocol, data interchange and automatic rejection or logging in of the verified device to the network. In this solution, the computer network to which the external device is automatically logged in, is unambiguously defined and it functions independently regardless of whether the external device is logged in to it or not. Such network, due to once defined parameters is exposed to attempts to access by unauthorized persons.

Another solution is known from patent application EP 2206312, which describes devices that have several data interchange interfaces. Before establishing the main connection by means of the first interface, the devices use another data interchange interface which allows verification of the connection. Successful verification permits automatic setup of the connection by means of the first interface. The interface for connection verification can be NFC, and the interface that will be set up following a successful verification can be Wi-Fi. This solution lacks automatic identification of the type of the device with which the connection has been established, and it is not possible to control such device.

### SUMMARY OF THE INVENTION

The method for automatically establishing a wireless connection between a mobile device and at least one stationary device, by placing the mobile device in proximity to the stationary device, where the mobile device is equipped with a short-range communication module NFC MD and a long-range communication module Wi-Fi MD, and the stationary device is equipped with a short-range communication module NFC SD and a long-range communication module Wi-Fi SD , **characterized in that** it comprises the following steps.

In Step 1, a wireless connection between the NFC MD module and the NFC SD module is established in common way and after establishing the connection, an electromagnetic signal S1 is generated in the mobile device and transmitted from the NFC MD module to the NFC SD module. The signal S1 comprises a digital identifier of the mobile device.

In Step 2, the signal S1 is transmitted from the NFC SD module to a control module located in the stationary device. In the control module the access right of the mobile device to the stationary device is verified by comparison the digital identifier of the mobile device to a reference digital identifier stored in the control module. Only in a case when both identifiers and are compatible, new signals S2, S3 and S4 are generated in the control module. The signal S2 is the activation signal for the Wi-Fi SD module. The signal S3 comprises the parameters of the temporary Wi-Fi network and the IP address of the stationary device. The signal S4 comprises a digital identifier of the type of the stationary device. The signals S2, S3 and S4 are further transmitted according to two paths, path A and path B.

According to path A, in Step 3, the Wi-Fi SD module is activated by receiving the signal S2 from the control module. Next, in Step 4, after activation of the Wi-Fi SD module, the signal S3 is transmitted from the control module to the Wi-Fi SD module. In the Wi-Fi SD module a generation of a temporary Wi-Fi network is started. Further action for path A is realized in step 9.

According to path B, in Step 5, the signal S3 and the signal S4 are transmitted from the control module to the NFC SD module. Next, in Step 6, the signal S3 and the signal S4 are transmitted from the NFC SD module to the NFC MD module. Then, in Step 7, the signal S4 is transmitted from the NFC MD module to modules for the operation of the stationary devices, located in the mobile device. The modules have module identifiers. Only one of said modules is activated, the module which has a module identifier which is compatible with the digital identifier of the type of the stationary device. In Step 8, the signal S3 is transmitted from the NFC MD module to the Wi-Fi MD module. Further action for path B is realized in step 9.

In Step 9, which is common for path A and path B, in the Wi-Fi MD module the presence of the temporary Wi-Fi network generated in Wi-Fi SD module is checked. If the temporary Wi-Fi network exists, the Wi-Fi MD module logs in to the temporary Wi-Fi network and the connection between the mobile device and the stationary device is established using the obtained IP address of the stationary device. If the temporary Wi-Fi network does not exist, then Wi-Fi MD module waits until the temporary Wi-Fi network is generated.

Preferably, after establishing the connection between the mobile device and the stationary device, a new signal S5 is generated in the mobile device and transmitted to the stationary device. The signal S5 comprises data for controlling the stationary device.

Preferably, after establishing the connection between the mobile device and the stationary device, a new signal S6 is generated in the stationary device and transmitted to the mobile device. The signal S6 comprises information about the status of the stationary device.

Preferably, data obtained from the stationary device are displayed on the display of the mobile device.

Preferably, the parameters of the temporary Wi-Fi network are generated as pseudorandom values.

The advantage of the method according to the present invention is a quick and safe establishment of wireless connections with various stationary automatic-control devices by means of one universal mobile device and the ability to control the operation of a stationary device by means of a mobile device as well as the ability to obtain diagnostic information about the status of stationary devices on the mobile device. The operator does not need to manually enter the access passwords and other parameters, which results in quicker initiation of the wireless connection between the mobile device and various stationary devices, which is achieved by preliminary automatic data exchange between the devices by means of a wireless short-range communication. The automatically transmitted data are required to initiate the wireless long-range communication between the mobile device and the stationary device. The requirement of physical contact between the mobile device and the stationary device during the preliminary automatic data interchange between the devices by means of the wireless short-range communication increases the connection safety, as it enforces possession of the proper authorization by the operator who approaches the stationary devices, which are usually located in rooms where access is restricted for unauthorized persons. In addition, the wireless long-range communication is temporary and it is set up using unique parameters generated only once for establishing one particular long-range communication between a mobile device and a given stationary device. A wireless connection configured in this way is resistant to sniffing of the network parameters for their later unauthorized use because, when the connection between the mobile device and the stationary device is broken, the wireless long-range network is completely shut down in the stationary device. Moreover, establishment of a new connection between the mobile device and the same stationary device is based on a different, unique set of parameters.

### BRIEF DESCRIPTION OF THE DRAWINGS

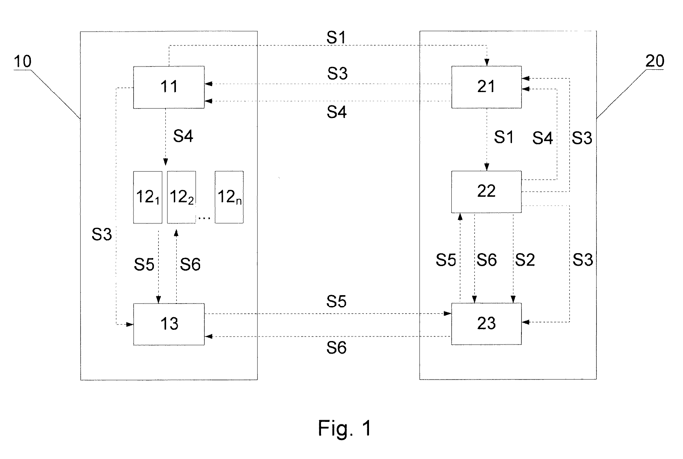

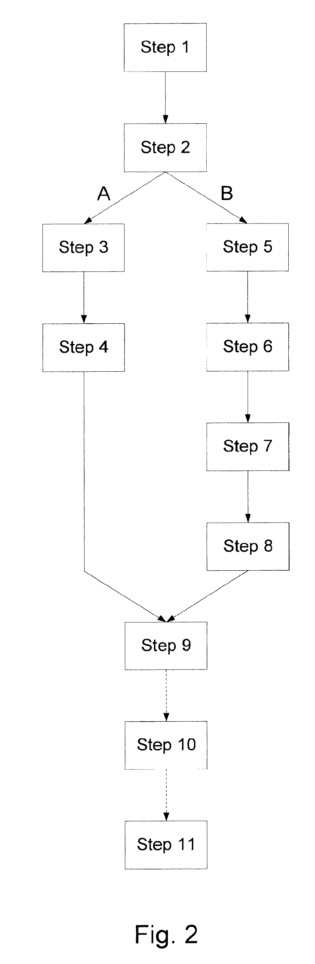

The method and the system according to the invention are explained with an example of their embodiment, on the drawing where fig. 1 shows a schematic diagram of a mobile device wirelessly connected to a stationary device, fig. 2 shows a series of steps executed during the establishment of a wireless connection between the mobile device and the stationary device.

### DETAILED DESCRIPTION OF THE INVENTION

The method and the system according to the invention are executed using a mobile device 10, which establishes a wireless connection with a stationary device 20, which is shown in fig. 1. The mobile device can be, for example, a portable computer, a tablet or a cell phone, preferably of a Smartphone type, whereas the stationary device can be, for example, any industrial automation device, such as an inverter or a relay in a power network. Both devices are equipped with standard housings and provided with processors and displays, which are not shown in the drawing.

The mobile device 10 is equipped with a wireless short-range communication module NFC MD 11 and a wireless long-range communication module Wi-Fi MD 13. The mobile device 10 is also equipped with modules for the operation of stationary devices 12₁, 12₂...12ₙ, where n is a natural number. The number of modules for the operation of stationary devices 12₁, 12₂...12ₙ depends on the number of types of operated stationary devices 20. Each of said modules has unique module identifier MI. The set of module identifiers MI₁, MI₂ ... MIₙ represents all modules 12₁, 12₂...12ₙ respectively. In modules 12₁, 12₂...12ₙ, there are implemented computer software applications dedicated to the operation of particular types of stationary devices 20. The function of all modules of the mobile device 10 is controlled by the processor of the mobile device.

The stationary device 20, similarly to the mobile device 10, is equipped with a wireless short-range communication module NFC SD 21 and a wireless long-range communication module Wi-Fi SD 23, and additionally it is equipped with a control module 22, to which data are supplied from the NFC SD module 21 or Wi-Fi SD module 23. The operation of all the modules of the stationary device 20 is controlled by the processor of the stationary device.

The mobile device 10 communicates wirelessly with the stationary device 20 via the short-range communication modules NFC MD 11 and NFC SD 21, respectively, or via the long-range communication modules Wi-Fi MD 13 and Wi-Fi SD 23, respectively. In both cases, communication is realized by means of electromagnetic signals.

The method according to the invention is performed in the following Steps 1 - 9.

### Step 1

The mobile device 10 nears the appointed area on the stationary device 20 and a wireless connection between the modules NFC MD 11 and NFC SD 21 is established. The distance at which the connection is established is within a range of zero to a few centimeters between the casings of the two devices. The modules NFC MD 11 and NFC SD 21 establish communication by sending appropriate electromagnetic signals in the form of digital data, in compliance with wireless communication standards. When the connection has been established, a signal S1 comprising a digital identifier DIM of the mobile device 10 is transmitted from the NFC MD module 11 to the NFC SD module 21. The identifier DIM can be, for example, the serial number of the mobile device, the license number, or the private cryptographic key, which are among the standard method of device or user identification.

### Step 2

In the stationary device 20, the signal S1 is transmitted from the NFC SD module 21 to the control module 22. The access right of the mobile device 10 to the stationary device 20 is verified in the control module 22. The verification is executed by directly or indirectly comparing the digital identifier DIM of the mobile device to a reference digital identifier RDI stored in the control module 22. The verification can be based on known methods of device or user identification, such as the device serial number or the user digital identifier. In case of negative verification, an additional signal comprising information about lack of authorization is transmitted from the stationary device 20 to the mobile device 10 and the connection between devices is shut down. In case of positive verification , new signals S2, S3 and S4 are generated in the control module 22. The signal S2 comprises data required for activation of the Wi-Fi SD module 23. The signal S3 comprises the parameters of the temporary Wi-Fi network , i.e. the name of the network (SSID - Service Set Identifier), login and password, as well as the IP address of the stationary device 20. Preferably, parameters of the temporary Wi-Fi network are generated as pseudorandom values. The signal S4 comprises a digital identifier (DIT) of the type of the stationary device 20. Next steps are executed concurrently, in two paths. Two steps are realized according to path A and four steps according to path B.

### Step 3

According to path A, a signal S2 is transmitted from the control module 22 to the Wi-Fi SD module 23, whereby the Wi-Fi SD module 23 is activated.

### Step 4

Next, after activation of the Wi-Fi SD module 23, the signal S3 is transmitted from the control module 22 to the Wi-Fi SD module 23. The Wi-Fi SD module 23 begins a process of generation of a temporary Wi-Fi network based on parameters comprised in the signal S3. Further action for path A is realized in step 9.

### Step 5

According to path B, the signal S3 and the signal S4 are transmitted from the control module 22 to the NFC SD module 21.

### Step 6

Next, the signal S3 and the signal S4 are transmitted from the stationary device 20 via NFC SD module 21 to the mobile device 10 via NFC MD module 11.

### Step 7

Next, in the mobile device 10, the signal S4 is transmitted from the NFC MD module 11 to the modules for the operation of stationary devices 12₁, 12₂...12ₙ. The digital identifier (DIT) of the type of the stationary device 20 comprised in the signal S4 is compared with module identifiers (MI₁, MI₂ ... MIₙ). Only one of module identifiers (MI₁, MI₂ ... MIₙ) can be selected as compatible with the digital identifier DIT. Selected module identifier is related to particular module for the operation of stationary devices and this module is activated.

### Step 8

Next, after activation of the module for the operation of stationary device, the signal S3 is transmitted from the NFC MD module 11 to the Wi-Fi MD module 13. Further action for path B is realized in step 9.

### Step 9

The step 9 is common for path A and path B. In the Wi-Fi MD module 13 the presence of the temporary Wi-Fi network generated by the Wi-Fi SD module 23 is checked. If the temporary Wi-Fi network exists, then the Wi-Fi MD module 13 logs in to the temporary Wi-Fi network. After logging to the temporary Wi-Fi network, the Wi-Fi MD module 13 automatically connects to the stationary device 20 using the IP address of the stationary device 20. This operation ends the process of automatic establishment of the wireless connection between the mobile device 10 and the stationary device 20. If the temporary Wi-Fi network does not exist, then Wi-Fi MD module 13 waits limited time until the temporary Wi-Fi network is generated.

Next steps are executed optionally.

### Step 10

After establishing a connection between the mobile device 10 and the stationary device 20, a signal S5 is generated in selected module for the operation of stationary devices. The signal S5 comprises data required for controlling the stationary device 20, for example it can comprise new settings of the stationary device 20. Generated signal S5 is transmitted by the Wi-Fi MD module 13 and the Wi-Fi SD module 23 to the control module 22. It allows for controlling the stationary device 20 from the mobile device 10.

Independently, after establishing a connection between the mobile device 10 and the stationary device 20, a signal S6 is generated in the control module 22 in the stationary device 20. The signal S6 comprises information about the status of the stationary device 20, e. g. current or historic diagnostic data of the stationary device 20. The signal S6 is transmitted by the Wi-Fi SD module 23 and the Wi-Fi MD module 13 to the selected module for the operation of stationary devices in the mobile device 10.

### Step 11

The data obtained from the stationary device 20 is presented on the display of the mobile device 10 in the form of charts or tabular compositions so that the operator can assess the status of the stationary device 20.

In case of establishing a wireless connection between the mobile device 10 and more than one stationary devices 20, each connection is established separately, as described in the Steps 1-11.

## Claims

1. A method for automatically establishing a wireless communication between a mobile device (10) and at least one stationary device (20), by placing the mobile device (10) in proximity to the stationary device (20), where the mobile device (10) is equipped with a short-range communication module NFC MD (11) and a long-range communication module Wi-Fi MD (13), and the stationary device (20) is equipped with a short-range communication module NFC SD (21) and a long-range communication module Wi-Fi SD (23), **characterized in that** it comprises the following steps:
• in Step 1, a wireless connection between the NFC MD module (11) and the NFC SD module (21) is established in common way and after establishing the connection, an electromagnetic signal S1 is generated in the mobile device (10) and transmitted from the NFC MD module (11) to the NFC SD module (21), where said signal S1 comprises a digital identifier (DIM) of the mobile device (10);
• in Step 2, the signal S1 is transmitted from the NFC SD module (21) to a control module (22) located in the stationary device (20), in said control module (22) the access right of the mobile device (10) to the stationary device (20) is verified by comparison the digital identifier (DIM) of the mobile device (10) to a reference digital identifier (RDI) stored in the control module (22), and only in a case when both identifiers (DIM) and (RDI) are compatible, new signals S2, S3 and S4 are generated in the control module (22), where said signal S2 is the activation signal for the Wi-Fi SD module (23), the signal S3 comprises the parameters of the temporary Wi-Fi network and the IP address of the stationary device (20), and the signal S4 comprises a digital identifier (DIT) of the type of the stationary device (20); and the signals S2, S3 and S4 are further transmitted according to two paths, path A and path B;
• according to path A, in Step 3, the Wi-Fi SD module (23) is activated by receiving the signal S2 from the control module (22);
• next, in Step 4, after activation of the Wi-Fi SD module (23), the signal S3 is transmitted from the control module (22) to the Wi-Fi SD module (23) and in the Wi-Fi SD module (23) a generation of a temporary Wi-Fi network is started and further action for path A is realized in step 9;
• according to path B, in Step 5, the signal S3 and the signal S4 are transmitted from the control module (22) to the NFC SD module (21);
• next, in Step 6, the signal S3 and the signal S4 are transmitted from the NFC SD module (21) to the NFC MD module (11);
• then, in Step 7, the signal S4 is transmitted from the NFC MD module (11) to modules for the operation of the stationary devices (12₁, 12₂...12ₙ), located in the mobile device (10) and having module identifiers (MI₁, MI₂ ... MIₙ) respectively, and only one of said modules is activated, which has a module identifier which is compatible with the digital identifier (DIT) of the type of the stationary device (20);
• in Step 8, the signal S3 is transmitted from the NFC MD module (11) to the Wi-Fi MD module (13) and further action for path B is realized in step 9;
• in Step 9, which is common for path A and path B, in the Wi-Fi MD module (13) the presence of the temporary Wi-Fi network generated in Wi-Fi SD module (23) is checked and if it exists, the Wi-Fi MD module (13) logs in to the temporary Wi-Fi network and the connection between the mobile device (10) and the stationary device (20) is established using the obtained IP address of the stationary device (20), and if the temporary Wi-Fi network does not exist, then Wi-Fi MD module (13) waits until the temporary Wi-Fi network is generated.

2. A method according to claim 1 **characterized in that** after establishing the connection between the mobile device (10) and the stationary device (20), a new signal S5 is generated in the mobile device (10) and transmitted to the stationary device (20), where said signal S5 comprises data for controlling the stationary device (20).

3. A method according to claim 1 or 2 **characterized in that** after establishing the connection between the mobile device (10) and the stationary device (20), a new signal S6 is generated in the stationary device (20) and transmitted to the mobile device (10), where said signal S6 comprises information about the status of the stationary device (20).

4. A method according to claim 3 **characterized in that** data obtained from the stationary device (20) are presented on a display of the mobile device (10).

5. A method according to claim 1 **characterized in that** the parameters of the temporary Wi-Fi network are generated as pseudorandom values.
